# EUROPEAN PATENT APPLICATION

(11) **EP 3 072 788 A1**
(43) Date of publication of application: **28.09.2016**
(21) Application number: 14864074.1
(22) Date of filing: 28.10.2014
(51) Int. Cl.: B62D 55/065

(54) **ALL-TERRAIN VEHICLE (VARIANTS)**

(30) Priority: 22.11.2013 RU 2013152129
(71) Applicant: Kostkin, Mikhail Dmitrievich, St.Petersburg, 196070 (RU); Popovich, Alexander Maximilyanovich, St.Petersburg, 192236 (RU)
(72) Inventor: Kostkin, Mikhail Dmitrievich, St.Petersburg, 196070 (RU); Popovich, Alexander Maximilyanovich, St.Petersburg, 192236 (RU)
(74) Representative: Sloboshanin, Sergej
(86) International application number: PCT/RU2014/000818
(87) International publication number: WO 2015/076704

(57) **Abstract**

The invention is aimed at improving the cross-country performance, controllability and reliability of all-terrain vehicles while making optimal use of its inner space.

The all-terrain vehicle comprises a body with a power unit, chassis, and control unit mounted therein. The power unit comprises a mechanical engine, mechanical-to-electrical energy converter, and four electric motors. The chassis comprises four track assemblies, each connected to a respective electric motor. The track assemblies are arranged in pairs in lateral recesses of the front and rear sections of the all-terrain vehicle body. Each track assembly includes a track belt embracing a driving wheel and at least two idle wheels, wherein the drive wheel is mounted on the upper section of the body, while the idle wheels are mounted below the lower section of the body. The drive wheels of the front pair of track assemblies are mounted at the front end of the all-terrain vehicle body, while the drive wheels of the rear pair of track assemblies are mounted at the rear end of the all-terrain vehicle body, so that said track assemblies of the front and rear sections of the vehicle are positioned symmetrically relative to the mid-section of the body. The suspension of a track assembly is designed as a frame carrying axle mounts for idle wheels, wherein said frame is attached to the vehicle body with at least two damping elements. The control unit provides for independent control over each electric motor. In the second embodiment, a single integrated member - motor wheel - is used instead of the combination of elements - an electric motor and drive wheel.

## Description

### FIELD OF INVENTION

The present invention relates to vehicles, in particular, to all-terrain tracked vehicles with four tracks.

### PRIOR ART

A tracked vehicle design is known from patent CA2555455, publication **date** 04/02/2007, which comprises two track assemblies characterized by variable geometry of the relative position of drive and idle wheels. This design is intended for use as a remotely operated robot capable of moving, among other, across rough terrain, and overcoming stairs and ditches. The variable geometry of its track assemblies enables it to overcome a wide variety of obstacles, especially stairs. The direction of vehicle movement is controlled by braking one of the two track assemblies. This type of propulsion system comprises one track assembly on each side of the body, which impairs the maneuverability and cross-country performance of the vehicle. Furthermore, this design can be used only for small and relatively lightweight robotic vehicles.

Also known are tracked vehicles that use an internal combustion engine, which drives an electrical generator. In this type vehicle, drive wheels are driven by electric motors powered by the generator. An example of such a vehicle is described in international application WO2011005180, publication date 01/13/2011. This articulated tracked vehicle comprises two pivotally connected units with the power plat consisting of an engine and electric power generator being mounted in the first unit. Each tracked unit is equipped with electric motors connected to drive wheels of both track assemblies. Both tracked vehicle units are controlled from the first unit. The direction of vehicle movement is controlled by braking one of the two track assemblies.

A pickup type vehicle design that allows substitution of wheels with track assemblies is described in patent CA2140600, publication date 06/22/1996. Each track assembly includes a frame with a drive drum, idle wheels and an endless track belt embracing the drive drum and at least two idle wheels. The drive drum is attached to the vehicle rather than wheel. Similar to an automobile, the direction of vehicle movement is controlled by turning the track assemblies.

The closest analog is the solution described in patent GB925032, publication date 05/01/1963. Four track assemblies are mounted instead of wheels. Each track assembly includes a frame with a drive wheel and two idle wheels mounted thereon. An endless track belt embraces the drive and idle wheels. A resilient member connecting the axles of the idle wheels adjusts the track tension. Similar to an automobile, the direction of vehicle movement is controlled by turning the track assemblies.

A poor cross-country performance on hard-to-pass and obstacle-ridden terrain caused by, among other, inadequate geometry of the track assemblies constitutes a disadvantage of the design in accordance with patent GB925032. A track assembly of such a design can not effectively overcome dikes, ditches and breastworks. Besides, turning the track assemblies requires greater effort than turning the wheels.

### DISCLOSURE OF INVENTION

The enhancement of cross-country performance, controllability and reliability of all-terrain vehicles combined with optimal use of vehicle inner space is the technical result that the claimed invention achieves.

The all-terrain vehicle comprises a body with a power unit, chassis and control unit mounted therein. The power unit consists of a mechanical engine, mechanical-to-electrical energy converter, and four electric motors. The chassis comprises four track assemblies, each connected to a respective electric motor. The track assemblies are arranged in pairs in lateral recesses of the front and rear sections of the all-terrain vehicle body. Each track assembly comprises an endless belt track, which embraces the drive wheel coupled to an electric motor, and at least two idle wheels, wherein the drive wheel is located in the upper section of the vehicle body, while the idle wheels are located below the lower section of the body. The drive wheels of the front pair of track assemblies are mounted at the front end of the all-terrain vehicle body, while the drive wheels of the rear pair of track assemblies are mounted at the rear end of the all-terrain vehicle body, so that said track assemblies of the front and rear sections of the vehicle are positioned symmetrically relative to the mid-section of the body. The suspension of a track assembly is designed as a frame carrying axle mounts for idle wheels, wherein said frame is attached to the vehicle body with at least two damping elements. The control unit provides for independent control over each electric motor.

The cross-country performance and controllability of the all-terrain vehicle are enhanced primarily by the design and arrangement of track assemblies. Each track assembly geometrically represents a segment of a large diameter wheel, which ensures a high controllability and crossing capacity when moving across terrain with various obstacles, such as ditches, pits, rocks, etc. Moreover, the availability of four symmetrically arranged track assemblies enables the vehicle to overcome obstacles at forward and backward movement with equal facility, thus further improving its cross-country performance. The use of independently controlled electric motors also contributes to the cross-country performance of the vehicle. The torque, rate and direction of rotation of each electric motor are controlled independently. Some track assemblies can rotate in one direction, the other in the opposite. The availability of four track assemblies enables the vehicle to maneuver on a very broken ground and to spin the vehicle practically on the spot. The symmetrical arrangement of the track assemblies relative to each other makes the vehicle more stable and comfortable. The vehicle stability and its cross-country performance further increase due to the placement of vehicle's heavy elements, particularly the engine and mechanical-to-electrical energy converter, in the lower mid-section of the vehicle. The simple design of the vehicle and independent control over each electric motor further contribute to the reliability of the all-terrain vehicle.

As was stated above, the symmetrical arrangement of track assemblies with their drive wheels high-mounted on the upper front and rear sections of vehicle body, and idle wheels low-mounted closer to the body mid-section enhance the vehicle cross-country performance and controllability, as well as optimize the body space utilization, especially its lower mid-section, the entire width of which can be utilized for carrying equipment and passengers. The design of the all-terrain vehicle, even if it is small in dimensions, can accommodate at least three passengers and load, or even stretchers for evacuating casualties.

In one embodiment, the lateral geometry of each track assembly is close to a triangle.

The drive and idle wheels of each track assembly can comprise at least two wheels arranged in parallel. This improves the load distribution along the track belt and enhances the vehicle cross-country performance.

The track assemblies can be arranged symmetrically with respect to the mid cross section of the all-terrain vehicle to better balance the whole arrangement and provide a roughly equal cross-country capacity when moving forward and backward.

As a rule, the suspension frame is pivotally mounted on the drive wheel axle to enable its turning by a certain angle, which improves the vehicle capacity to overcome such obstacles as pits or bumps.

The mechanical engine and mechanical-to-electrical energy converter can be mounted in lower mid-section of the body to improve the stability and cross-country capacity of the vehicle.

One end of the first damping member can be attached to the body of all-terrain vehicle and the other end to the frame beam that connects the axles of drive wheel and idle wheel located at the end of the body, while one end of the second damping member can be attached to the body of all-terrain vehicle, and its other end to the frame beam that connects idle wheels.

The frame beam that connects axle mounts of adjacent idle wheels can include a resilient member for tensioning the belt of each track assembly.

The all-terrain vehicle can carry a battery for storing the electric energy generated by said mechanical-to-electrical energy converter, which enables the vehicle to operate driven by the stored electrical energy in case of a mechanical failure of the engine.

The all-terrain vehicle can accommodate a driver seat in the front section of the body and two passenger seats mounted in parallel in the mid-section of the body. Furthermore, it can provide at least one space for stretchers along the side wall of the mid-section of the vehicle body.

In the second embodiment, the all-terrain vehicle comprises a body with a power unit, chassis and control unit mounted therein. Said power unit comprises a mechanical engine, mechanical-to-electrical energy converter, while the chassis contains four track assemblies arranged in pairs in the lateral recesses of the front and rear sections of the vehicle body. Each track assembly comprises a track belt embracing a wheel with an electric hub motor and at least two idle wheels. The motor wheel is mounted in the upper section of the body, while the idle wheels are located below the lower section of the body; the motor wheels of the front pair of track assemblies are located at the front end of the vehicle body, while the motor wheels of the rear pair of track assembly are located at the rear end of the vehicle body, so that said track assemblies in the front and rear sections of the vehicle are symmetrical relative to the mid-section of the vehicle body. The suspension of the track assembly is designed as a frame carrying axle mounts for idle wheels, wherein said frame is attached to the vehicle body with at least two damping members, and said control device provides an independent control over each motor wheel.

The second embodiment differs from the first one in that it uses a single integrated element - a motor wheel, instead of a combination of elements including a motor and a drive wheel. This simplifies the design of the all-terrain vehicle. All other properties of the vehicle generally remain almost similar to those of the first embodiment.

In one embodiment, the lateral geometry of each track assembly is close to a triangle.

The track assemblies can be arranged symmetrically with respect to the mid cross-section of the vehicle body.

The rotational mounting of the suspension frame enables its turning on the motor wheel axle by a certain angle.

The mechanical engine and mechanical-to-electrical energy converter can be mounted in the lower mid-section of the body.

One end of the first damping member can be attached to the body of all-terrain vehicle and the other end to the frame beam that connects the axles of motor wheel and idle wheel located at the end of the body, while one end of the second damping member can be attached to the body of all-terrain vehicle, and its other end to the frame beam that connects idle wheels.

The frame beam that connects the axle mounts of adjacent idle wheels can include a resilient member.

The vehicle can comprise a battery for storing the electrical energy generated by said mechanical-to-electrical energy converter.

The all-terrain vehicle can accommodate a driver seat in the front section of the body and two passenger seats mounted in parallel in the mid-section of the body. Furthermore, it can provide at least one space for stretchers along the side wall of the mid-section of the vehicle body.

### BRIEF DESCRIPTION OF DRAWINGS

Fig. 1 shows a side view of the all-terrain vehicle, FIG. 2 presents its top view, and FIG. 3 its front view.
Fig. 4 shows a track assembly mounted in a recess of the body.
Fig. 5 shows the design of the vehicle chassis.
Fig. 6 shows the layout of the vehicle power unit.
Fig. 7 shows the arrangement of the power unit and control unit.
Fig. 8 shows the side view of the vehicle while traveling in water.
Fig. 9 gives the top view of the vehicle carrying rescue equipment.

### EMBODIMENTS OF THE INVENTION

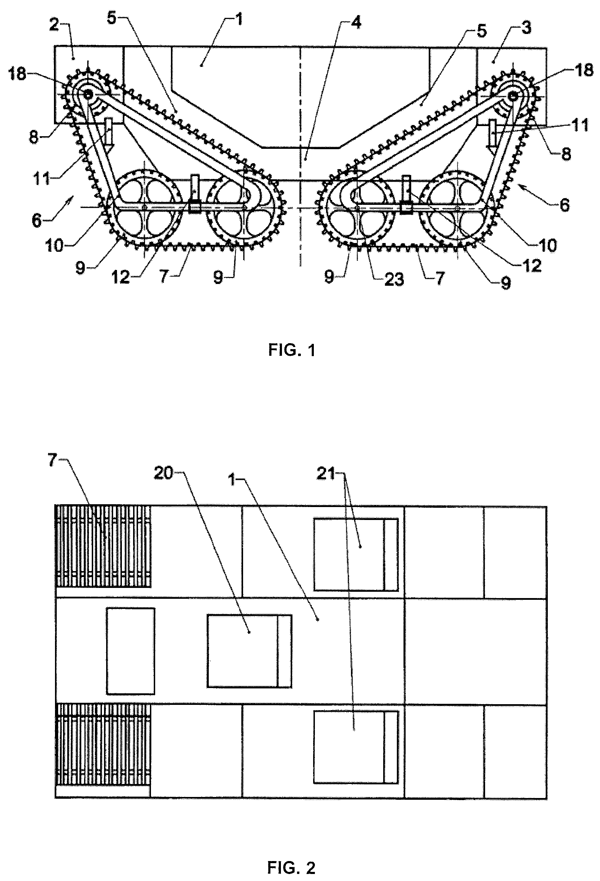

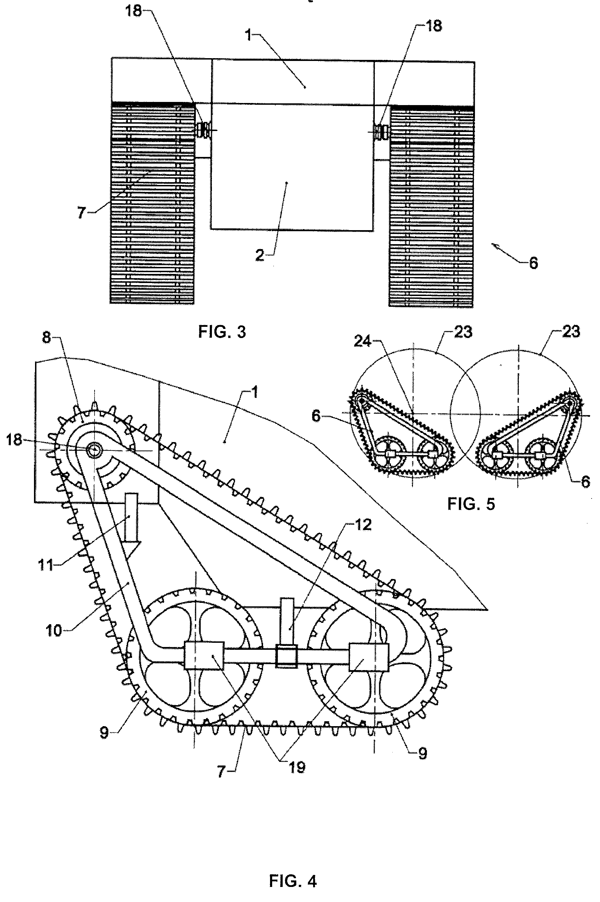

The all-terrain vehicle (Fig. 1 - Fig. 4) comprises body 1 with a power unit, chassis and control unit mounted therein. The chassis comprises four track assemblies 6, each of which is coupled to a respective electric motor 15. Track assemblies 6 are arranged in pairs in lateral recesses 5 of front section 2 and rear section 3 of vehicle body 1. Each assembly 6 comprises track belt 7 embracing drive wheel 8 and two idle wheels 9. Drive wheel 8 is mounted in the upper section of body 1 and idle wheels 9 are mounted below the lower section of body 1, wherein assemblies 6 of the front and rear sections of the vehicle are located symmetrically with respect to mid-section 4 of body 1. Drive wheels 8 and idle wheels 9 can be made in the form of at least two discs coupled with track belt 7 (not shown in the figures). Each track assembly 6 (Fig. 5) features a geometrical configuration close to a triangle and, in fact, represents a segment of hypothetical large diameter wheel 23 with its center at point 24. This fact, in particular, stipulates a high cross-country performance of the vehicle. The suspension of track assembly 6 is made as frame 10 carrying axle mounts 22 for idle wheels 9, wherein frame 10 is attached to body 1 with, for example, two damping members 11. Suspension frame 10 of each track assembly 6 is rotationally mounted on axle 18 of drive wheel 8 to permit its angular turning. One end of first damping member 11 is attached to body 1 of the vehicle, while its other end is attached to the beam of frame 10 that connects axle 18 of drive wheel 8 and idle wheel 9 located at the end of body 1. One end of the second damping member 11 is also attached to body 1 of the vehicle, while its other end is attached to the beam that connects idle wheels 9 of frame 10. The beam of frame 10 that connects axle mounts 22 of adjacent idle wheels 8 comprises a damping member 19 for tensioning track belt 7.

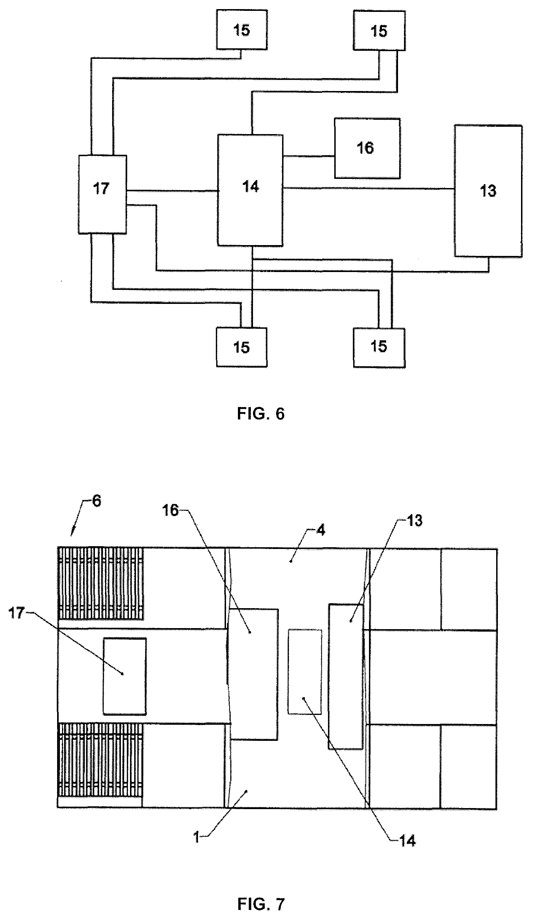

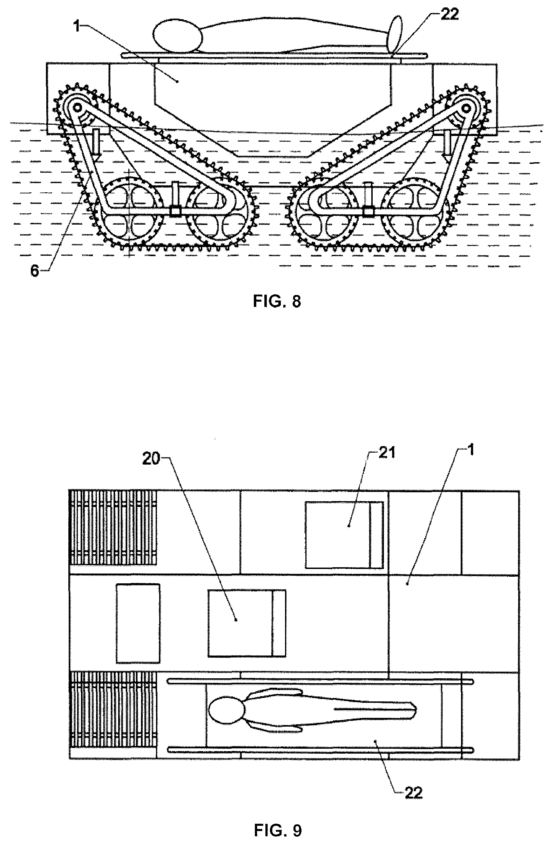

The power unit (Fig. 6) includes a mechanical engine 13, in particular, an internal combustion engine, mechanical-to-electrical energy converter 14, and four electric motors 15. Converter 14 can be represented by an electric generator. Converter 14 is coupled to battery 16 that stores the electric energy. So, the vehicle can operate driven by mechanical engine 13 or by electric energy stored in battery 16. Mechanical engine 13, mechanical-to-electrical energy converter 14 and storage battery 16 are located in lower mid-section 4 of body 1 to improve the stability and cross-country performance of the vehicle (Fig. 7). The design of assemblies 6 makes body 1 of the vehicle water resistant. Axles 18 of drive wheels 8 are mounted on the upper section of body 1. The vehicle's center of gravity is situated low in the plane of its mid cross-section due to low positioning of mechanical engine 13, mechanical-to-electrical energy converter 14, and storage battery 16. Therefore, the all-terrain vehicle can float as shown in Fig.8. An additional propeller, e.g. water screw or jet, can be mounted on the floating vehicle.

Control unit 17 provides an independent control over each electric motor 15.

The all-terrain vehicle can use a single integrated member - motor wheel, instead of a combination of elements - an electric motor and a drive wheel. Motor wheels are known in the prior art, though they have not been used in all-terrain vehicles up to now. The use of motor wheels can simplify the design of the vehicle and make it more serviceable under field conditions. The motor wheel is not shown in the drawings.

The all-terrain vehicle can accommodate driver seat 20 and two passenger seats 21. Moreover, the vehicle can be equipped with stretcher 25 placed at the side wall of mid-section 4 of body 1 for transporting patients.

The all-terrain vehicle is a universal means of transportation designed for traveling over roads and rough terrain. The all-terrain vehicle features high cross-country capacity due to the geometry and symmetrical arrangement of track assemblies 6, which enables the vehicle to move forward and backward with equal facility. Each drive wheel 8 is coupled with its own electric motor 15, which provides for an independent control of power, speed and direction of rotation of each electric motor 15. Such design of the power unit and chassis permits to control the direction of all-terrain vehicle movement without turning track assemblies, as it is traditionally performed in tracked vehicles with one pair of track assemblies. On the other hand, the availability of two pairs of track assemblies 6 with independently controlled electric motors and application of control sensors 17 make it possible to use active safety systems common for wheeled vehicles, like ABS, on the all-terrain vehicle. The vehicle body provides enough space for duplicating all the control systems and power unit of the vehicle. This significantly increases the reliability of the vehicle.

### INDUSTRIAL APPLICABITY

The inventive structure can serve as an all-terrain vehicle operating as a marsh buggy, snowmobile or amphibian vehicle. The vehicle can be used, among other, for rescue operations, which is important for such small-size transportation means. In this case one or both passenger seats are replaced with one or two stretchers.

## Claims

1. An all-terrain vehicle comprising a body with a power unit mounted therein, a chassis and a control unit, wherein the power unit includes a mechanical engine, mechanical-to-electrical energy converter, and four electric motors, while the chassis comprises four track assemblies, each of which is coupled to a corresponding electric motor, said track assemblies are arranged in pairs in lateral recesses of the front and rear sections of vehicle body; each track assembly comprises a track belt embracing a drive wheel connected to an electric motor and at least two idle wheels, said drive wheel being mounted on the upper section of the body and idle wheels below the lower section of the body; thereat the drive wheels of the front couple of track assemblies are mounted at the vehicle front end and the drive wheels of the rear pair of track assemblies at the vehicle rear end, so that said the track assemblies at the front and rear of the vehicle are symmetrical with respect to the mid-section of vehicle body; wherein the suspension of track assembly is designed as a frame with axle mounts for idle wheels, wherein said frame is attached to the vehicle body with at least two damping members, and said control device provides for an independent control over each motor.

2. The all-terrain vehicle of Claim 1, wherein the lateral geometry of each track assembly is close to a triangle.

3. The all-terrain vehicle of Claim 1, wherein the drive and idle wheels of each track assembly are represented by at least two wheels arranged in parallel.

4. The all-terrain vehicle of Claim 1, wherein the track assemblies are arranged symmetrically with respect to the mid cross-section of the all-terrain vehicle.

5. The all-terrain vehicle of Claim 1, wherein said suspension frame is rotationally mounted on the drive wheel axle to permit its angular turning.

6. The all-terrain vehicle of Claim 1, wherein the mechanical engine and mechanical-to-electrical energy converter are mounted in the lower mid-section of the body.

7. The all-terrain vehicle of Claim 1, wherein one end of said first damping member is attached to the all-terrain vehicle body and the other end to the frame beam that connects the axle of the drive wheel and the idle wheel located at the end of the body, while one end of said second damping member is also attached to the vehicle body and the other end to the frame beam that connects idle wheels.

8. The all-terrain vehicle of Claim 1, wherein the frame beam that connects axle mounts of adjacent idle wheels comprises a resilient member.

9. The all-terrain vehicle of Claim 1 comprising a battery for storing the electric energy generated by said mechanical-to-electric energy converter.

10. The all-terrain vehicle of Claim 1 comprising a driver seat positioned in the front section of the body, and two passenger seats arranged in parallel in the mid-section of the body.

11. The all-terrain vehicle of Claim 1 having at least one space for accommodating stretchers along the side wall of the mid-section of the vehicle body.

12. An all-terrain vehicle comprising a body with a power unit, a chassis and a control unit mounted therein; said power unit includes a mechanical engine and mechanical-to-electrical energy converter, while the chassis comprises four track assemblies arranged in pairs in the lateral recesses of the front and rear sections of the body, with each assembly comprising a track belt that embraces a motor wheel containing an electric motor, and at least two idle wheels; wherein, the motor wheel is positioned in the upper section of the body and the idle wheels below the lower section of the body; thereat said motor wheels of the front pair of track assemblies are mounted at the front end of the body, while the motor wheels of the rear pair of track assemblies is mounted at the rear end of the vehicle body, so that said front and rear track assemblies of the vehicle are symmetrical with respect to the mid-section of the body; said track assembly suspension is designed as a frame carrying axle mounts for idle wheels, wherein said frame is attached to the vehicle body by means of at least two damping members; and said control unit provides an independent control over each motor wheel.

13. The all-terrain vehicle of Claim 12, wherein the lateral geometry of each track assembly is close to a triangle.

14. The all-terrain vehicle of Claim 12, wherein the track assemblies are arranged symmetrically with respect to the mid cross-section of the all-terrain vehicle.

15. The all-terrain vehicle of Claim 12, wherein said suspension frame is rotationally mounted on the motor wheel axle to permit its angular turning.

16. The all-terrain vehicle of Claim 12, wherein the mechanical engine and mechanical-to-electrical energy converter are mounted in the lower mid-section of the body.

17. The all-terrain vehicle of Claim 12, wherein one end of said first damping member is attached to the all-terrain vehicle body and the other end is attached to the frame beam that connects the axle of the motor wheel and the idle wheel located at the end of the body, while one end of said second damping member is also attached to the vehicle body and the other end to the frame beam that connects idle wheels.

18. The all-terrain vehicle of Claim 12, wherein the frame beam that connects axle mounts of adjacent idle wheels comprises a resilient member.

19. The all-terrain vehicle of Claim 12 comprising a battery for storing the electric energy generated by said mechanical-to-electric energy converter.

20. The all-terrain vehicle of Claim 12 comprising a driver seat positioned in the front section of the body, and two passenger seats arranged in parallel in the mid- section of the body.

21. The all-terrain vehicle of Claim 12 having at least one space for accommodating stretchers along the side wall of the mid-section of the vehicle body.
